(19) Europäisches Patentamt

European Patent Office

Office européen des brevets

(11) **EP 4 072 284 B1**

(12) **EUROPEAN PATENT SPECIFICATION**

(45) Date of publication and mention
of the grant of the patent:
**17.09.2025 Bulletin 2025/38**

(21) Application number: **20898636.4**

(22) Date of filing: **14.12.2020**

(51) International Patent Classification (IPC):
*B01F 23/232* (2022.01)   *B01F 25/312* (2022.01)
*B01F 25/32* (2022.01)   *B01F 25/433* (2022.01)
*A01K 63/04* (2006.01)   *C02F 3/12* (2023.01)

(52) Cooperative Patent Classification (CPC):
**C02F 3/1294; A01K 63/042; B01F 23/232;
B01F 23/2326; B01F 25/3121; B01F 25/3124;
B01F 25/32; B01F 25/4337**

(86) International application number:
**PCT/NO2020/050314**

(87) International publication number:
**WO 2021/118367 (17.06.2021 Gazette 2021/24)**

(54) **APPARATUS FOR CONTROLLED MIXING OF GAS INTO WATER AND METHOD**

GERÄT ZUM GEREGELTEN EINMISCHEN VON GAS IN WASSER UND PROZESS

DISPOSITIF DE COMMANDE DE GAZ POUR LE MÉLANGE RÉGULÉ DE GAZ DANS DE L'EAU ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2019 NO 20191480**

(43) Date of publication of application:
**19.10.2022 Bulletin 2022/42**

(73) Proprietor: **Nordic Clean Pumps AS
5523 Haugesund (NO)**

(72) Inventors:
• **RØVANG, Kjell Erik
5533 Haugesund (NO)**
• **APELAND, Johannes
5533 Haugesund (NO)**

(74) Representative: **Håmsø Patentbyrå AS
P.O. Box 9
4068 Stavanger (NO)**

(56) References cited:
WO-A1-2017/052380   WO-A1-2017/052380
CN-A- 103 503 818   GB-A- 216 173
JP-A- H06 285 345   US-A- 4 226 719
US-A- 4 271 099   US-A- 4 271 099
US-A1- 2013 004 382

## Description

## Field of the invention

The invention relates to aids for water improvement. More specifically, the invention relates to an apparatus for controlled mixing of gas into water.

## Background

This invention is an improvement on the subject matter which was applied for in Norwegian patent application 20151234 and WO2017 / 052380.

This WO2017 / 052380 discloses an apparatus for controlled mixing of gas into water comprising a water supply pipe, a gas supply pipe, a mixing chamber with a vacuum structure, an after chamber, an outlet pipe and a pump.

Poor water quality can be an obstacle to maintaining life in water. Ecosystems depend on water sources with a certain composition. Aquatic life forms usually need sufficient oxygen in the water to live. So-called "dead water" is acidic and can have oxygen content below what is usually needed to maintain life. Deterioration in water quality can disrupt an ecosystem, in a way that certain life forms or species can sustain life, but not others. This can lead to the spread of certain types of life at the expense of others.

In aquaculture farming, the quality of the water in which the fish is produced is generally of great importance for fish welfare and for producing a good product. For example, oxygen must be available in stable and correct amounts throughout the production area and throughout the production cycle for fish to survive and thrive in a farming process. The Norwegian Food Safety Authority describes in their legislation how stable and correct amounts of oxygen are to be obtained and checked. To ensure that the farmed fish have access to oxygen, measures can be taken to ensure sufficient oxygen: Move the farmed fish to fresh enclosures or tanks, pump oxygen-rich water into the farm and supply pressurized oxygen using bubble generators. Aeration techniques are also known, where air is introduced into the water to increase oxygen levels. Prior art aeration includes 'whipping' the surface of the water to stir and "forcing" air into the water at the surface to upgrade the quality of the water. Existing aeration techniques nevertheless have limitations in terms of efficiency or ensuring that good water is available to a sufficient degree. High nitrogen content or supersaturation of nitrogen in the water of fish farms can also be a problem. Acute supersaturation of nitrogen has resulted in high mortality at some plants. The danger is greatest in closed vessels but is also present in ordinary open fish farms

EP 2198704 B1 describes a device for supplying gas to water in sea cages, tanks or ponds with a pump and a dissolver for providing contact between gas and water by means of bubbles.

NO 317340 describes a device for oxygenating water in aquaculture facilities for marine organisms in the sea as well as a method of using the device. The invention provides supply of substantially pure oxygen which is distributed via a specified system to the water. Here, the described devices ensure that oxygen microbubbles are formed with an oxygen partial pressure which is such that the oxygen passes into the water in the fish farm.

These are relatively expensive solutions when using pure oxygen. The aquaculture industry needs a cheap and robust solution for oxygenation. In the following, we will describe such a solution which, in addition to oxygenation, also reduces the nitrogen level so that the total gas pressure is not increased.

## Summary of the invention

The invention is defined by the independent claims. The invention describes in one aspect an apparatus for controlled mixing of gas into water comprising a water supply pipe with diameter d comprising an antechamber with a pressure gauge, a gas supply pipe with diameter $^1/_{10} - {}^1/_2\, d$ and a pressure gauge. Furthermore, the apparatus comprises a mixing chamber, with a diameter d, which is an extension of the water supply pipe and comprises a vacuum structure with surfaces having an acute angle, $\beta$, between 25 and 45 degrees with the longitudinal axis of the water supply pipe so that a negative pressure is formed behind the vacuum structure when the water is in motion through the mixing chamber. The mixing chamber also comprises a gas orifice behind the vacuum structure where the gas is sucked into the water flow by said negative pressure. The apparatus also includes an after chamber provided with a pressure gauge and the after-chamber is attached to the downstream end of the mixing chamber, an outlet pipe of diameter d attached to the downstream end of the after chamber, and a pump connected to the upstream end of the water supply pipe to supply a controllable water flow with a correct pressure to the antechamber. The invention is characterized in that the after-chamber has a larger cross-section than the water supply pipe and the after-chamber has a larger cross-section than the outlet pipe to form a lower pressure, where the after-chamber extends a distance of the order of 1/3 d in the longitudinal direction.

Furthermore, the water flow is regulated so that the pressure difference between the antechamber and the after chamber is 0.6 - 1.5 Bar, and that the negative pressure in the gas supply pipe near the gas orifice is 0.2 - 0.8 Bar, so that a turbulent mixture of gas and water occurs under low pressure in the after-chamber.

## Brief description of the drawings

To improve the understanding of the invention, we have made figures with examples of embodiments. The same reference numerals refer to the same part in different figures.

Fig. 1 shows an embodiment of the apparatus with a housing
Fig. 2 a-c show another embodiment of mixing chamber and after chamber in greater detail
Fig. 3 shows the apparatus inserted on a main water line

## Detailed description

In this text we use the terms upstream and downstream according to the usual flow direction of the water. We describe here an apparatus for controlled mixing of gas into liquid. Especially the gases oxygen and nitrogen mixed in water. In this text 'the longitudinal direction' is parallel to the center axis of the various chambers and the outlet pipe. The pressure is measured as relative pressure, so that 0 Bar is normal air pressure at sea level.

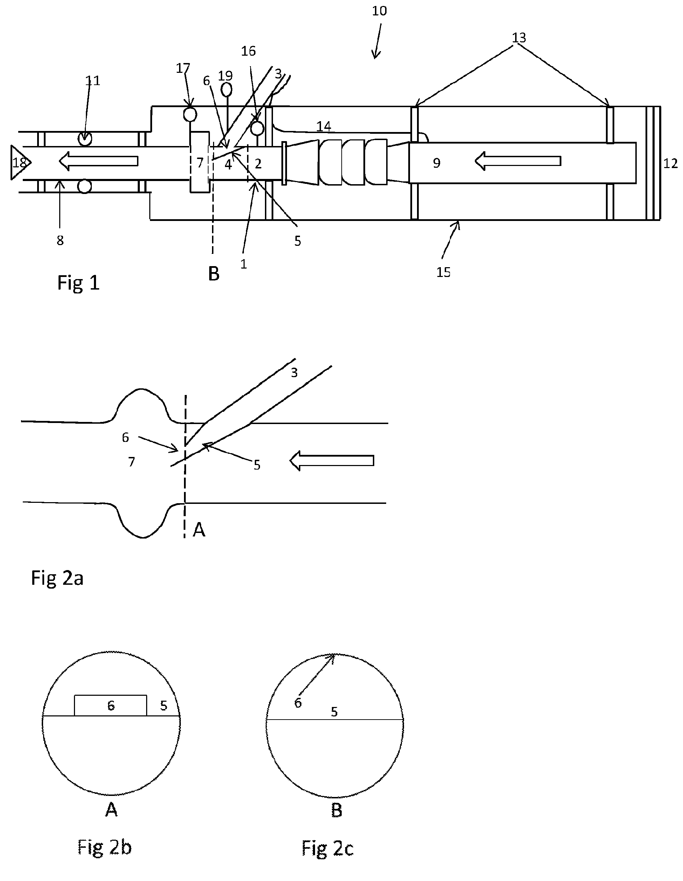

The apparatus 10, shown in Figure 1, comprises a water supply pipe 1 with diameter d and a smaller gas supply pipe 3 with diameter $1/10\ d - {}^1/_2\ d$, both of which are connected to a mixing chamber 4. The diameter must be large enough to avoid flow resistance in the gas supply pipe. In front of (upstream of) the mixing chamber there is an antechamber 2 which is an extension of the water supply pipe, and where a pressure gauge 16 is mounted. A pressure gauge 19 is also mounted on the gas supply pipe close to the mixing chamber. The mixing chamber is also an extension of the water supply pipe 1 and comprises a vacuum structure 5 and at least one gas orifice 6 connected to the gas supply pipe 3. The purpose of the vacuum structure is to give negative pressure and turbulence when mixing gas and water and to regulate the mixing ratio between gas and water. The direction of flow in the apparatus is indicated by the thick horizontal arrows.

In one embodiment, the vacuum structure is an inlet plate 5 extending from one side of the pipe towards the center of the pipe at an acute angle β with the longitudinal axis of the water supply pipe so that a negative pressure is formed behind the inlet plate 5 when the water is in motion. In said embodiment a gas orifice 6 is connected to the gas supply pipe and is located behind the inlet plate, preferably where the center line of the inlet plate is crossing the sidewall of the pipe. When the water is moving forward, the said negative pressure will suck gas from the gas supply pipe into the mixing chamber.

In other embodiments, the vacuum structure may be an obtuse and hollow, conical or pyramidal structure attached to the sides of the tube symmetrically about the longitudinal axis of the tube, the surfaces of the vacuum structure having an acute angle β with the longitudinal axis of the water supply pipe. The vacuum structure or inlet plate covers 20 - 60 % of the cross-section of the water supply pipe 1, more preferably 30-50 %. A plurality of gas orifices may be distributed around the turbulence structure, preferably where the negative pressure is greatest. Furthermore, the vacuum structure may be two or more separate plates projecting from the side of the gas supply pipe at an acute angle β with the longitudinal axis of the water supply pipe. Each plate having a gas orifice located in a similar manner as the gas orifice 6 behind the said inlet plate 5. The angle β is between 25 and 45 degrees, more preferably between 30 and 40 degrees.

Furthermore, the apparatus comprises an after chamber 7 with a larger cross-section than the water supply pipe 1. The after chamber 7 is attached to the downstream end of the mixing chamber 4 approximately where the inlet plate 5 ends and has a length of the same order as one third of the diameter of the water supply pipe. The increased cross-section of the after chamber causes a pressure drop. The air and water undergo a turbulent mixture under low pressure in the after chamber. A pressure gauge 17 is mounted in the after-chamber, preferably near the outlet pipe. Preferably the cross section of the after chamber is 5-50% larger, more preferably 15-25% larger than the water supply pipe.

The apparatus also comprises an outlet pipe 8 with a diameter having the same size as the water supply pipe 1 which is attached to the downstream end of the after-chamber. After The mixing process in the mixing chamber and the after chamber, the water continues through the outlet pipe to be discharged into the body of water which is to be improved. Preferably, the water supply pipe, the mixing chamber, the after chamber and the outlet pipe have a common longitudinal axis.

For the apparatus to work, an adjustable water pressure must be provided on the water supply pipe. In an advantageous embodiment of the invention, an in-line liquid-filled pump 9 is provided in a housing 15 which is attached to the upstream end of the water supply pipe.

This layout gives some surprising effects that we believe are related to turbulent mixing of gas and water under low pressure. We can measure a significant reduction in the saturation level of nitrogen, and a saturation level for oxygen up to 165% when using air. That is, the total gas pressure in the water does not increase significantly.

To understand the invention, it may be useful to know how it originated. In an earlier variant of the invention, the after-chamber was not present, but otherwise the layout was the same. Water supply pipes and the air supply pipe 3 were connected to a T-shaped pipe. During tests, the inventor was able to establish normal values for oxygen and nitrogen, but suddenly the inventor had significantly improved measurements with up to 165% oxygen saturation and up to halving the nitrogen saturation. The setup was checked, and it turned out that the water supply pipe and the outlet pipe were not properly connected into the T-pipe. Since the two pipes have a significant thickness, an 'after-chamber' had emerged which caused a pressure drop. When the two pipes were pushed firmly into place, the beneficial effect was gone.

We cannot explain the effect in detail or claim an understanding of the observations, but in strong turbulence large gradients at a micro level occur both in temperature and pressure and these are parameters affecting the solubility of the gases in water to a large extent. For oxygen and nitrogen, the solubility increases with decreasing temperature and increases with pressure. For oxygen the temperature is most important and for nitrogen the pressure is most important at the relevant values. Furthermore, the size of a bubble depends on the surface tension and the gas pressure in the bubble. If the bubble is formed under lower pressure than the pressure present in the environment, the bubble will be smaller when it is released by the apparatus and exposed to water under higher pressure. Smaller bubbles give a larger reactive surface where gas can be mixed into liquid and vice versa. Smaller bubbles also take longer time to float to the surface. Therefore, it is possible to argue that the effect occurs due to turbulent mixing under low pressure. Further investigations into this are ongoing.

With the layout as described and where the diameter of the air supply pipe is 75 mm and the water supply pipe is 150 mm and the inlet plate is a flat plate that goes to the middle of the pipe and has a rectilinear end face and where the angle $\beta$ is 35 degrees, we achieve the desired effect when the pump is adjusted such that a negative pressure can be measured by the pressure gauge 19 in the gas inlet pipe 3 close to the gas orifice 6 of 0.3-0.5 Bar and a differential pressure between the after-chamber and the front chamber of 0.6 - 0.8 Bar. In order for such an adjustment of the parameters to be made in a simple manner, the pump must be adjustable. In this example, the gas supply pipe has a diameter of

$^{1}/_{2}$ d . Optionally, the gas orifice can be made adjustable in size and the inlet plate can be made adjustable in and out.

Generally, the most important parameter to obtain the correct differential pressure is the water velocity. When the water hits the vacuum structure or inlet plate, pressure will build up in the antechamber 2 and pressure will drop in the after chamber 7. The negative pressure measured by the pressure gauge 19 by the gas orifice should be between a lower and upper threshold for the invention to work. The inventor has found that the lower and upper threshold should be 0,2 and 0,8 Bar respectively, more preferably 0,3 and 0,5 Bar. Also, the differential pressure between the antechamber and the after chamber must be between a lower and upper threshold respectively. The lower and upper threshold of the differential pressure should be 0,6 and 1,5 Bar, more preferably, 0,8 and 1,2 Bar.

In the following we will describe a method for operating the apparatus in a body of water. We assume that the desired gas source is attached to the gas supply pipe. The gas source could be air, oxygen or other sources. The method comprises the following steps:

a. locate the apparatus to the desired depth,
b. start the pump and increase the power until the differential pressure between the pressure gauge 16 in the antechamber and the pressure gauge 17 in the after chamber is within the upper and lower threshold value,
c. if the pressure measured on the pressure gauge 19 by the gas supply pipe is not within an upper and lower threshold value, adjust the gas supply from the gas source until the desired vacuum is obtained.

In a preferred embodiment, the inlet plate is adjustable and can be pushed in and out in order to adjust the mixing ratio between gas and water and the negative pressure behind the vacuum structure 5 or the inlet plate 5. Furthermore, the two sides and the end edge of the inlet plate can be designed in different ways. There is probably an optimal design. At present it is simply cut off at a right angle. Furthermore, the gas orifice 6 can be designed in different ways. In a preferred embodiment, the orifice is wider in a direction perpendicular to the pipe so that the air is better distributed along the width of the inlet plate. For example, the orifice may be rectangular as shown in Figure 2b.

The pump in FIG. 1 is located in a cylindrical pump housing and there is an annulus between the pump housing and the pump which is filled with water. The water enters the annulus through a grid or filter that keeps unwanted objects away from the pump. The pump has a motor connected to one or more rotary units via a shaft (not shown). The rotating units draw the water through the grid and into the inlet and push the water into the water inlet pipe. The pump is centered in the pump housing by means of centering fasteners 13. In an advantageous embodiment, the housing also encloses the outlet pipe as a protective shell. The annulus between the outlet pipe and the housing must be tight. Then the annulus between the pump and the pump housing will function as a reservoir of purified water that enters the pump.

Advantageously, a spreader 18 can be placed in the orifice of the outlet pipe when used in open cages or open water. The water that comes out of the outlet pipe is in many cases supersaturated with oxygen and it is an advantage to spread the water so that the supersaturation is diluted and distributed in the water masses. If the apparatus is located on a pipe, this is of course not relevant.

In an advantageous embodiment, the pump motor is a motor which is filled with e.g. a 50/50 glycerin and water. This is approved by the Norwegian Food Safety Authority for use in fish farming. This provides optimal protection against the pressure differences that can occur during immersion while the risk of poisoning in the event of leaks is zero.

When the apparatus is placed in a body of water, e.g. a fish farm, it can be beneficial to keep it at different depths. With the apparatus placed deeper than 15 meters, the pressure becomes too high and reduction of nitrogen does not take place when using air. Tests have shown that from a depth of 2 to 10 meters all the positive effects occur if the settings are optimal. For greater depths over 15 meters, the same effect can be achieved by using pure oxygen mixed with air or pure oxygen.

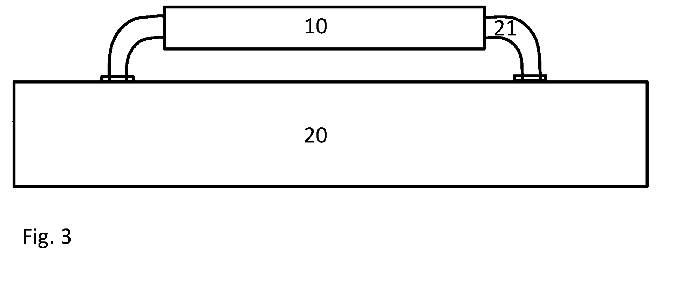

The apparatus can be used for a water supply to fish farms, for example a smolt plant, where the water is supplied through pipes. In this application, a partial flow from a main water line 20 is preferably taken out to a side pipe 21, as shown in figure 3, where a apparatus according to the invention treats the water in the side pipe and releases it into the main water line again. The proportion treated is preferably 2-10% of the water. In this way, the water with a high oxygenation level is mixed with the untreated water while it still takes some time until the water reaches the farmed fish.

**Inventory**

1 Water supply pipe
2 Antechamber
3 Gas supply pipe
4 Mixing chamber
5 Vacuum structure / Inlet plate
6 Gas orifice
7 After chamber
8 Outlet pipe
9 Pump
10 Apparatus
11 Sealing
12 Filter
13 Mounting and centering units
14 Electrical cable
15 House
16 Pressure gauge antechamber
17 Pressure gauge after chamber
18 Spreader
19 Pressure gauge gas supply
20. Main water line
21. Side pipe

**Claims**

1. Apparatus for controlled mixing of gas into water, wherein the apparatus comprises:

    a water supply pipe (1) with diameter **d** comprising an antechamber (2) with a pressure gauge (16);
    a gas supply pipe (3) with a diameter between 1/10 d and $^1/_2$ **d**, provided with a pressure gauge (19);
    a mixing chamber (4), with a diameter **d,** which is an extension of the water supply pipe (1) and comprises:

        a vacuum structure (5) with surfaces having an acute angle, β, between 25 and 45 degrees with the longitudinal axis of the water supply pipe which forms a negative pressure behind the vacuum structure (5) when water is in motion through the mixing chamber (4);
        a gas orifice (6) behind the vacuum structure (5) where the gas is sucked into the water flow by said negative pressure;

    an after-chamber (7) provided with a pressure gauge (17), and the after-chamber (7) is attached to the downstream end of the mixing chamber (4);
    an outlet pipe (8) with diameter **d,** and the outlet pipe (8) is attached to the downstream end of the after-chamber (7); and
    a pump (9) connected to the upstream end of the water supply pipe (1) to supply a controllable flow of water with a correct pressure to the antechamber (2),
    wherein the after-chamber (7) has a larger cross-section than the water supply pipe (1) and the after-chamber (7) has a larger cross-section than the outlet pipe (8) to form a lower pressure, where the after-chamber (7) extends a distance of the order of 1/3 **d** longitudinally, and wherein the apparatus is configured such that the water flow is regulated so that the differential pressure between antechamber (2) and the after-chamber (7) is 0.6 - 1.5 Bar, and that the negative pressure in the gas supply pipe (3) near the gas orifice (6) is 0.2 - 0.8 Bar, so that a turbulent mixture of gas and water occurs under low pressure in the after-chamber (7).

2. The apparatus according to claim 1, wherein the vacuum structure (5) is an inlet plate (5) which runs from one side of the water supply pipe (1) towards the center of the water supply pipe (1) at an acute angle β with the longitudinal axis of the water supply pipe (1) so that a negative pressure is formed behind the inlet plate (5) when the water is in motion.

3. The apparatus according to claim 2, wherein the inlet plate (5) is adjustable in the longitudinal direction so that the inlet plate (5) can be pushed in and out.

4. The apparatus according to claim 2, wherein the gas orifice (6) is wider in the direction perpendicular to the water supply pipe (1) so that an air is better distributed along the width of the inlet plate (5).

**5.** The apparatus according to claim 1, wherein the cross section of the after chamber (7) is 5-50 % larger, more preferably 15-25% larger than the cross section of the water supply pipe (1).

**6.** The apparatus according to claim 1, wherein a cylindrical watertight housing (15) encloses the pump (9), the water supply line (1), the antechamber (2), the mixing chamber (4), the after-chamber (7) and the outlet pipe (8), wherein a seal (11) is provided between the outlet pipe (8) and the housing (15), and an inlet with a filter (12) is provided upstream of the pump (9).

**7.** The apparatus according to claim 1, wherein the pump (9) is a liquid-filled submersible pump.

**8.** The apparatus according to claim 7, wherein the liquid in the pump (9) is a 50/50% mixture of glycerine and water.

**9.** The apparatus according to claim 1, wherein a diffuser (18) is mounted at the end of the outlet pipe (8) for use of the apparatus in open water.

**10.** The apparatus according to claim 1, wherein the apparatus is connected to a side pipe (21) of a main water pipe (20) for treating the water in the side pipe (21) before it is returned to the main water pipe (20).

**11.** Method for use of the apparatus according to claim 1, wherein the method comprises the steps of:

a) locate the apparatus at a desired depth;
b) start the pump (9) and increase a power until the differential pressure between the pressure in the antechamber (2) and the pressure in the after-chamber (8) is between 0.6 Bar and 1.5 Bar; and
c) read the pressure gauge (19) at the gas supply line (3) and adjust the gas supply until the vacuum at the gas orifice (6) is between 0.2 and 0.8 Bar.

**12.** Method according to claim 11, wherein the differential pressure between the pressure in the antechamber (2) and the pressure in the after-chamber (8) is between 0.8 Bar and 1.2 Bar.

**13.** Method according to claim 11, wherein the vacuum at the gas orifice (6) is between 0.3 and 0.5 Bar.

**Patentansprüche**

**1.** Gerät zum geregelten Einmischen von Gas in Wasser, wobei das Gerät umfasst:

eine Wasserzufuhrleitung (1) mit einem Durchmesser d, umfassend eine Vorkammer (2) mit einem Manometer (16);
eine Gaszufuhrleitung (3) mit einem Durchmesser zwischen 1/10 d und 1\2 d, die mit einem Manometer (19) bereitgestellt ist;
eine Mischkammer (4) mit einem Durchmesser d, die eine Verlängerung der Wasserzufuhrleitung (1) ist und umfasst:

eine Vakuumstruktur (5) mit Oberflächen, die einen spitzen Winkel β zwischen 25 und 45 Grad mit der Längsachse der Wasserzufuhrleitung haben, die ein Vakuum hinter der Vakuumstruktur (5) bildet, wenn sich das Wasser durch die Mischkammer (4) bewegt;
eine Gasöffnung (6) hinter der Vakuumstruktur (5), wo das Gas durch den Unterdruck in den Wasserstrom gesaugt wird;

eine mit einem Manometer (17) bereitgestellte Nachkammer (7), wobei die Nachkammer (7) am stromabwärtigen Ende der Mischkammer (4) angebracht ist;
eine Auslassleitung (8) mit dem Durchmesser d, wobei die Auslassleitung (8) am stromabwärtigen Ende der Nachkammer (7) angebracht ist; und
eine Pumpe (9), die mit dem stromaufwärts gelegenen Ende der Wasserzufuhrleitung (1) verbunden ist, um der Vorkammer (2) einen steuerbaren Wasserstrom mit einem korrekten Druck zuzuführen, wobei die Nachkammer (7) einen größeren Querschnitt als die Wasserzufuhrleitung (1) aufweist und die Nachkammer (7) einen größeren Querschnitt als die Auslassleitung (8) aufweist, um einen niedrigeren Druck zu bilden, wobei sich die Nachkammer (7) über eine Strecke in der Größenordnung von 1/3 d in Längsrichtung erstreckt, und wobei das Gerät konfiguriert ist, so dass der Wasserdurchfluss reguliert wird, so dass der Differenzialdruck zwischen der Vorkammer (2) und der Nachkammer (7) 0,6 - 1,5 bar beträgt und dass der Unterdruck in der Gaszufuhrleitung (3) in der Nähe der Gasdüse (6) 0,2 - 0,8 bar beträgt, so dass in der Nachkammer (7) ein turbulentes Gas-Wasser-Gemisch unter niedrigem Druck entsteht.

**2.** Gerät nach Anspruch 1, wobei die Vakuumstruktur (5) eine Einlassplatte (5) ist, die von einer Seite der Wasserzufuhrleitung (1) zur Mitte der Wasserzufuhrleitung (1) in einem spitzen Winkel β mit der Längsachse der Wasserzufuhrleitung (1) verläuft so dass ein Unterdruck hinter der Einlassplatte (5) gebildet wird, wenn das Wasser in Bewegung ist.

**3.** Gerät nach Anspruch 2, wobei die Einlassplatte (5) in der Längsrichtung verstellbar ist, so dass die Einlassplatte (5) ein- und ausgeschoben werden kann.

**4.** Gerät nach Anspruch 2, wobei die Gasöffnung (6) in der Richtung senkrecht zur Wasserzufuhrleitung (1) breiter ist, so dass die Luft besser über die Breite der Einlassplatte (5) verteilt wird.

**5.** Gerät nach Anspruch 1, wobei der Querschnitt der Nachkammer (7) um 5-50 %, vorzugsweise um 15-25 %, größer ist als der Querschnitt der Wasserzufuhrleitung (1).

**6.** Gerät nach Anspruch 1, wobei ein zylindrisches, wasserdichtes Gehäuse (15) die Pumpe (9), die Wasserzufuhrleitung (1), die Vorkammer (2), die Mischkammer (4), die Nachkammer (7) und die Auslassleitung (8) umschließt, wobei eine Dichtung (11) zwischen der Auslassleitung (8) und dem Gehäuse (15) bereitgestellt ist und ein Einlass mit einem Filter (12) stromaufwärts der Pumpe (9) bereitgestellt ist.

**7.** Gerät nach Anspruch 1, wobei die Pumpe (9) eine mit Flüssigkeit gefüllte Tauchpumpe ist.

**8.** Gerät nach Anspruch 7, wobei die Flüssigkeit in der Pumpe (9) eine 50/50%ige Mischung aus Glycerin und Wasser ist.

**9.** Gerät nach Anspruch 1, wobei am Ende der Auslassleitung (8) ein Diffusor (18) für den Einsatz des Geräts im offenen Wasser angebracht ist.

**10.** Gerät nach Anspruch 1, wobei das Gerät mit einer Seitenleitung (21) einer Hauptwasserleitung (20) verbunden ist, um das Wasser in der Seitenleitung (21) zu behandeln, bevor es in die Hauptwasserleitung (20) zurückgeführt wird.

**11.** Verfahren zur Verwendung des Geräts nach Anspruch 1, wobei das Verfahren die Schritte umfasst:

a) Anordnung des Geräts in der gewünschten Tiefe;
b) Starten der Pumpe (9) und Erhöhen einer Leistung, bis der Differenzialdruck zwischen dem Druck in der Vorkammer (2) und dem Druck in der Nachkammer (8) zwischen 0,6 bar und 1,5 bar liegt; und
c) Ablesen des Manometers (19) an der Gaszufuhrleitung (3) und Einstellen der Gaszufuhr, bis das Vakuum an der Gasdüse (6) zwischen 0,2 und 0,8 bar liegt.

**12.** Verfahren nach Anspruch 11, wobei der Differenzialdruck zwischen dem Druck in der Vorkammer (2) und dem Druck in der Nachkammer (8) zwischen 0,8 bar und 1,2 bar liegt.

**13.** Verfahren nach Anspruch 11, wobei das Vakuum an der Gasöffnung (6) zwischen 0,3 und 0,5 bar liegt.

## Revendications

**1.** Appareil pour le mélange régulé de gaz dans de l'eau, dans lequel l'appareil comprend : un tuyau d'alimentation en eau (1) avec un diamètre d comprenant une préchambre (2) avec un manomètre (16) ;

un tuyau d'alimentation en gaz (3) avec un diamètre entre 1/10 d et 1/2 d, fourni avec un manomètre (19) ;
une chambre de mélange (4), avec un diamètre d, qui est une extension du tuyau d'alimentation en eau (1) et comprend :

une structure d'aspiration (5) avec des surfaces présentant un angle aigu, β, entre 25 degrés et 45 degrés avec l'axe longitudinal du tuyau d'alimentation en eau qui forme une pression négative derrière la structure d'aspiration (5) lorsque l'eau est en mouvement à travers la chambre de mélange (4) ;
un orifice de gaz (6) derrière la structure d'aspiration (5) où le gaz est aspiré dans le flux d'eau par ladite pression négative ;

une après-chambre (7) fournie avec un manomètre (17), et l'après-chambre (7) étant fixée à l'extrémité aval de la chambre de mélange (4) ;
un tuyau de sortie (8) avec un diamètre d, et le tuyau de sortie (8) étant fixé à l'extrémité aval de l'après-chambre (7) ; et
une pompe (9) reliée à l'extrémité amont du tuyau d'alimentation en eau (1) pour alimenter la préchambre (2) en un flux régulable d'eau avec une pression correcte,
dans lequel
l'après-chambre (7) présente une section transversale plus grande que le tuyau d'alimentation en eau (1) et l'après-chambre (7) présente une section transversale plus grande que le tuyau de sortie (8) pour former une pression plus basse, où l'après-chambre (7) s'étend sur une distance de l'ordre de 1/3 d longitudinalement, et dans lequel l'appareil est configuré de telle sorte que le flux d'eau soit régulé afin que la pression différentielle entre la préchambre (2) et l'après-chambre (7) soit 0,6 bar à 1,5 bar, et que la pression négative dans le tuyau d'alimentation en gaz (3) près de l'orifice de gaz (6) soit 0,2 bar à 0,8 bar, afin qu'un mélange turbulent de gaz et d'eau se produise sous une faible pression dans l'après-chambre (7).

2.  Appareil selon la revendication 1, dans lequel la structure d'aspiration (5) est une plaque d'entrée (5) qui s'étend d'un côté du tuyau d'alimentation en eau (1) vers le centre du tuyau d'alimentation en eau (1) à un angle aigu 13 avec l'axe longitudinal du tuyau d'alimentation en eau (1) afin qu'une pression négative soit formée derrière la plaque d'entrée (5) lorsque l'eau est en mouvement.

3.  Appareil selon la revendication 2, dans lequel la plaque d'entrée (5) est réglable dans la direction longitudinale afin que la plaque d'entrée (5) puisse être poussée vers l'intérieur et vers l'extérieur.

4.  Appareil selon la revendication 2, dans lequel l'orifice de gaz (6) est plus large dans la direction perpendiculaire au tuyau d'alimentation en eau (1) afin qu'un air soit mieux distribué le long de la largeur de la plaque d'entrée (5).

5.  Appareil selon la revendication 1, dans lequel la section transversale de l'après-chambre (7) est 5 % à 50 % plus grande, de préférence 15 % à 25 % plus grande que la section transversale du tuyau d'alimentation en eau (1).

6.  Appareil selon la revendication 1, dans lequel un boîtier étanche à l'eau cylindrique (15) renferme la pompe (9), la conduite d'alimentation en eau (1), la préchambre (2), la chambre de mélange (4), l'après-chambre (7) et le tuyau de sortie (8), dans lequel un joint (11) est fourni entre le tuyau de sortie (8) et le boîtier (15), et une entrée avec un filtre (12) est fournie en amont de la pompe (9).

7.  Appareil selon la revendication 1, dans lequel la pompe (9) est une pompe submersible remplie de liquide.

8.  Appareil selon la revendication 7, dans lequel le liquide dans la pompe (9) est un mélange 50/50 % de glycérine et d'eau.

9.  Appareil selon la revendication 1, dans lequel un diffuseur (18) est monté à l'extrémité du tuyau de sortie (8) pour une utilisation de l'appareil en eau libre.

10. Appareil selon la revendication 1, dans lequel l'appareil est relié à un tuyau latéral (21) d'un tuyau d'eau principal (20) permettant de traiter l'eau dans le tuyau latéral (21) avant qu'elle ne soit renvoyée dans le tuyau d'eau principal (20).

11. Procédé d'utilisation de l'appareil selon la revendication 1, dans lequel le procédé comprend les étapes de :

   a) localisation de l'appareil à une profondeur souhaitée ;
   b) démarrage de la pompe (9) et augmentation d'une puissance jusqu'à ce que la pression différentielle entre la pression dans la préchambre (2) et la pression dans l'après-chambre (8) soit entre 0,6 bar et 1,5 bar ; et
   c) lecture du manomètre (19) au niveau de la conduite d'alimentation en gaz (3) et réglage de l'alimentation en gaz jusqu'à ce que le vide au niveau de l'orifice de gaz (6) soit entre 0,2 bar et 0,8 bar.

12. Procédé selon la revendication 11, dans lequel la pression différentielle entre la pression dans la préchambre (2) et la pression dans l'après-chambre (8) est entre 0,8 bar et 1,2 bar.

13. Procédé selon la revendication 11, dans lequel le vide au niveau de l'orifice de gaz (6) est entre 0,3 bar et 0,5 bar.

Fig 1

Fig 2a

A

Fig 2b

B

Fig 2c

Fig. 3

**EP 4 072 284 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NO 20151234
- WO 2017052380 A
- EP 2198704 B1
- NO 317340